(19) Europäisches Patentamt
European Patent Office
Office européen des brevets

(11) EP 2 273 701 B1

(12) **EUROPEAN PATENT SPECIFICATION**

(45) Date of publication and mention
of the grant of the patent:
**25.07.2012 Bulletin 2012/30**

(51) Int Cl.:
***H04B 10/148*** (2006.01)

(21) Application number: **09290523.1**

(22) Date of filing: **30.06.2009**

(54) **An optical burst-mode coherent-detection receiver having a buffer and an additional signal processing portion for determining initial reception parameters**

Optischer Burstmodus-Empfänger zur Kohärenzerkennung mit einem Puffer und einem zusätzlichen Signalverarbeitungsabschnitt zur Bestimmung von anfänglichen Empfangsparametern

Récepteur de détection cohérente en mode rafale optique doté d'un tampon et d'une partie de traitement de signaux supplémentaires pour déterminer les paramètres de réception initiaux

(84) Designated Contracting States:
**AT BE BG CH CY CZ DE DK EE ES FI FR GB GR HR HU IE IS IT LI LT LU LV MC MK MT NL NO PL PT RO SE SI SK TR**

(43) Date of publication of application:
**12.01.2011 Bulletin 2011/02**

(73) Proprietor: **Alcatel Lucent**
**75007 Paris (FR)**

(72) Inventors:
• **Zami, Thierry**
**91300 Massy (FR)**

• **Salsi, Massimiliano**
**75013 Paris (FR)**

(74) Representative: **Mouney, Jérôme et al**
**Alcatel-Lucent International**
**IP&S**
**32, avenue Kléber**
**92700 Colombes (FR)**

(56) References cited:
**EP-A- 1 942 590        WO-A-2007/045072**
**US-A1- 2007 147 850**

## Description

The invention relates to an optical coherent-detection receiver, in particular to an optical coherent-detection receiver for burst-mode operation.

Telecommunication operators demand increasing spectral efficiency in optical networks to better use their installed transmission infrastructure. For increasing the spectral efficiency, PSK (phase-shift keying) modulation formats in combination with polarization division multiplexing (PDM) and coherent detection with digital electronic processing can be used. This allows to achieve data rates up to 100 Gbit/s or even above per WDM (wavelength division multiplexing) channel. One exemplary modulation with high spectral efficiency is PDM-QPSK.

The capacity, i.e. the spectral efficiency, is not the only issue the operators must deal with. Another important aspect is the flexibility in terms of routing granularity. For efficiently filling up e.g. a 100 Gbit/s channel, a huge amount of traffic going from the same source network node to the same destination node is required. Such a constraint is relaxed if the routing granularity can be smaller than the capacity of a single WDM channel. A smaller granularity can be achieved through the use of optical burst or optical packets. It should be noted that throughout the application, the term optical burst is synonymous to the term optical packet. The application covers both OPS (optical packet switching) based systems and OBS (optical burst switching) based systems.

In such networks, optical bursts are routed from different source network nodes to a given destination node. The coherent receiver at the destination node has to operate in burst-mode and has to be capable to detect short bursts of data. Since the source of the bursts and thus the waveform of the received optical signal may vary from burst to burst, the coherent receiver needs to adapt to a new burst in a fast manner. Thus, optical packet reception by means of optical burst-mode coherent-detection receiver is very challenging, in particular when the modulation rate is very high. The combination of an optical packet (burst) network model (for instance as in EP 1 349 416 B1) with coherent detection at the receiver allows to get a very flexible network with high transmission capacity. As discussed above, a burst-mode coherent receiver for high data rate, however, is very challenging considering that today even the design of a real-time circuit-mode (i.e. non-burst-mode) coherent receiver is still challenging.

WO2007/045072 describes a method of processing a stream of digital samples of an optical signal received by a coherent optical receiver.

For the later discussion, the definition of another parameter is helpful: the inter-packet gap. The inter-packet gap (IGP) is the minimum time between two successive packets propagating along the same light-path (i.e. the minimum time between a packet's end and the beginning of the next packet). No data is transmitted during this minimum time slot. The IGP is typically indispensable so that the optical nodes have time to switch between two successive packets when the former packet is dropped and the latter one traverses the node transparently and vice versa. Obviously, the IGP should be as short as possible to have a good efficiency of packet multiplexing in the network (for instance, the IGP may be no longer than 5% of the shortest possible packet duration).

Combining coherent detection and burst-mode operation is an extremely new idea. In the following, constraints in the architecture of conventional coherent receiver are discussed that are not compatible with burst-mode operation.

In case of an optical PDM signal, the digital signal processing unit present in the scheme of the coherent detector typically performs at least two tasks in order to correctly detect the incoming signal: polarization demultiplexing (i.e. recovery of the two polarization components) and intermediate frequency cancellation due to a frequency offset between the incoming optical signal and the local oscillator signal of the coherent receiver. These two steps and optional further steps for signal recovery are typically based on adaptive algorithms and/or on the estimation of an unknown parameter.

For polarization demultiplexing and signal equalization, an adaptive filter may be used, with the filter being adapted based on a blind algorithm, such as the CMA (constant modulus algorithm). Both tasks may be performed by using a common filter or by using two separate filters. With respect to equalization, the filter adapted by an adaptive algorithm may perform residual dispersion compensation as well as polarization mode dispersion compensation. The CMA is based on the idea that the amplitude of a PSK modulated signal is constant and thus minimizes - in a mean squares sense - the error between the actual amplitude and the expected constant amplitude. The use of the CMA for adapting a combined polarization demultiplexing and equalization filter is described in the document "Digital Filters for Coherent Optical Receivers", Seb J. Savory, Optics Express, Vol. 16, No. 2, Jan 21, 2008 pp. 804-817. The discussion of the CMA is hereby incorporated by reference. Blind algorithms like the CMA are often converging processes, where convergence time is needed for finding a sufficient adaption state.

In a traditional optical circuit environment, it is less important that the tasks in a coherent receiver are optimized for a fast convergence time. However, in an optical packet (burst) network, the convergence time is a crucial parameter. Due to the variability of the transmission path, each optical packet may undergo different physical conditions. Therefore, all the "convergence phase" may be run at each packet arrival.

It should be noted that the incoming signal cannot be correctly detected before the convergence of the adaptive algorithms used in the receiver. Therefore, the concepts of optical packets and coherent detection are hardly compatible.

The simplest idea to perform burst-mode detection with a coherent detector is to add a number of symbols at the beginning of the optical packet, a kind of converging preamble. The symbols are training symbols needed for convergence of the adaptive algorithms.

Since these symbols cannot be correctly detected before a sufficient degree of convergence, it is evident that these symbols are no more available to transport actual data. The higher the number of training symbols is, the more accurate are the derived adaptive reception parameters. Thus, there is a trade-off between the usable data capacity of the optical packets and the accuracy of the adaptive reception parameters.

It is therefore an object of the present application to provide a burst-mode coherent-detection receiver which allows for high data capacity in combination with sufficient accuracy of the adaptive reception parameters. It is a further object to provide a corresponding method for receiving optical bursts, with the method using coherent detection.

These objects are achieved by the receiver and the method according to the independent claims.

A first aspect of the application relates to an optical burst-mode coherent-detection receiver for receiving optical bursts (in other words: packets). The receiver comprises a first signal processing portion receiving a signal derived from an optical burst. This signal is typically an electrical signal, more preferably a digital signal downstream of analog-to-digital conversion. Based thereon, the first signal processing portion determines initial reception parameters, in particular reception parameters for compensating physical impairments. The receiver further comprises a buffer for buffering the signal, in particular a FIFO (Fist In First Out) memory. Preferably, the buffer buffers the electrical signal as long as the first signal processing portion determines the initial reception parameters (or even longer). Moreover, the receiver has a second signal processing portion downstream of the buffer. The second signal processing portion receives the initial reception parameters and preferably uses the reception parameters for compensating physical impairments. Preferably, the second signal processing portion is initialized with the initial reception parameters and is configured to further refine the initial reception parameters. In other words: one or more algorithms in the second signal processing portion may further converge starting from the initial reception parameters.

The receiver further comprises a symbol identification block downstream of the second signal processing portion. Thus, the actual signal symbol identification is performed based on the output of the second signal processing portion.

The received signal may be buffered preferably at least as long as the initial reception parameters are determined in the first signal processing portion. After determination, the second signal processing portion can be initialized with the initial parameters and the signal from the buffer can be processed based on this initialization which should be preferably good enough to allow correct symbol identification. In this case, there is no need for a training preamble in the optical burst. Thus, the burst's beginning, which is initially evaluated in the first signal processing portion and - after buffering - recovered in the second signal processing portion, can be used both for the converging phase and for real detection.

Basically, it is possible that the second signal processing portion receives the initial reception parameters from the first signal processing portion but does not further refine the parameters but uses the initial parameters for compensation. However, this approach has a two drawbacks:

If it is assumed that only the first signal processing portion estimates the parameters, the parameters may be continuously transferred from the first signal processing portion to the second signal processing portion.

However, as a first drawback, at the end of each packet the second signal processing portion would employ "random" parameters because there no more actual packet on the first signal processing portion even if there is still an actual packet in the second signal portion due to the time shift caused by the FIFO memory.

Due to the presence of a FIFO buffer, the portion of the signal which is being processed by the second signal processing portion is not the same portion of the signal which have been used for parameters estimation by the first signal processing portion, but it is delayed by an amount of time (or samples) corresponding to the length of the FIFO buffer. As a second drawback, this approach is thus effective only in the case of a slowly-varying input signals (slowly with respect to the FIFO length), otherwise the estimated parameters would be too old and they would not be adequate for processing. Often, the condition of slowly varying input signal cannot be satisfied and, in a more general way, the delay introduced by the FIFO buffer will always degrade the quality of these parameters. The best parameters are the parameters estimated by the same block that performs the processing/correction, thus the proposed receiver of the application is initialized with the initial reception parameters but refines the initial reception parameters.

The receiver of the independent claim overcomes said drawbacks.

Preferably, the second signal processing portion is initialized with the initial reception parameters and thereafter refines the reception parameters (typically by further convergence). This prevents the above drawback. The adaption of the initial reception parameters further increases the accuracy of the parameters and thus further improves the signal recovery in the second signal processing portion.

According to a preferred embodiment, the first signal processing portion, the second signal processing portion and the FIFO memory operate in the digital domain, i.e. these blocks are digital blocks receiving digital signals.

The length of the FIFO memory preferably corresponds at least to the number of sequential signal samples which are required by the first signal processing portion to determine the initial reception parameters or to an even higher number.

According to a preferred embodiment, the FIFO memory is configured to output a trigger signal triggering the transfer of the initial parameters from the first signal processing portion to the second signal processing portion. Preferably, the trigger signal triggers the transfer when the FIFO buffer is full.

Such a trigger signal may be derived by using carrier sensing (CS) functionality. This well-known term refers to the capability of detecting the presence or absence of an incoming optical signal. Such a CS signal may be signal that has 1 bit of information. A CS signal may be determined by using an additional photodiode that senses the optical power or by computing the sum of the square of the signal(s) coming from the photodiode(s), preferably from balanced photodetectors. Preferably, four signals coming from four balanced photodetectors are used in case of PDM-QPSK modulation. Preferably, the signals after the ADC(s) are used for computing the sum.

When the CS signal signals that a new packet is about to enter the first signal processing portion, then the first signal processing portion is preferably reset, e.g. the internal state, memory or estimated parameters may be reset to a predefined initial state or initial value(s). The reset may speed up the convergence process for determining the initial reception parameters for the new optical packet.

The CS signal may propagate together with the received signal containing packet information through one or more blocks of the receiver.

Preferably, the FIFO buffer receives the CS signal and buffers the CS signal. When the CS signal propagates insides the FIFO memory, the CS signal is delayed in the same way as the received signal. Thus, the CS signal reaches the output of the FIFO buffer when the received signal of the new optical packet also reaches the output of the FIFO buffer (more exactly: the CS value which indicates a new packet reaches the FIFO output when the beginning of the packet reaches the FIFO output).

Thus, the CS signal at the output of the FIFO memory may trigger transmission of the initial parameters from the first signal processing portion to the second signal processing portion. This allows the second signal processing portion to recover the buffered signal of a new optical packet by using the initial reception parameters.

The initial reception parameters may include parameters selected from the group of:

- one or more parameters for polarization demultiplexing and/or signal equalization in the second signal processing portion, such as filter coefficients for a polarization demultiplexing filter and/or equalization filter,
- one or more parameters for carrier frequency offset compensation in the second signal processing portion,
- one or more parameters for carrier phase offset compensation in the second signal processing portion,
- one or more parameters for clock recovery and/or retiming in the second signal processing portion, and
- one or more parameters for chromatic dispersion compensation in the second signal processing portion.

Both the first and the second signal processing portions may include a polarization demultiplexer and/or signal equalizer block, with the block in the second signal processing portion receiving initial reception parameters determined by the block in the first signal processing portion.

Both the first and the second signal processing portions may include a carrier frequency offset estimation block, with the block in the second signal processing portion receiving initial reception parameters determined by the block in the first signal processing portion.

Both the first and the second signal processing portions may include a carrier phase offset estimation block, with the block in the second signal processing portion receiving initial reception parameters determined by the block in the first signal processing portion.

Both the first and the second signal processing portions may include a clock recovery and/or retiming block, with the block in the second signal processing portion receiving initial reception parameters determined by the block in the first signal processing portion. The block may perform a digital filtering and squaring algorithm, e.g. an algorithm as disclosed in "Digital filter and Square Timing Recovery", M. Oerder, et al., IEEE Transactions on Communications, Vol. 36, No. 5, May 1988. This document is hereby incorporated by reference.

Both the first and the second signal processing portions may include a chromatic dispersion compensation block, with the block in the second signal processing portion receiving initial reception parameters determined by the block in the first signal processing portion.

Such a block in a first signal processing portion (or only a part of such a block) may be essentially a copy of the corresponding block (or of the part of a block) in the second signal processing portion or vice versa. Thus, a block may be duplicated and reused. When reusing the block, the block may be slightly modified due to a modified usage. E.g. a block in first signal processing portion may be configured to converge from scratch whenever a new packet arrives. The corresponding block in the second signal processing portion may be modified in such a way that this block starts from an initial state determined by a corresponding block in the first signal processing portion.

Not only a block or a part thereof may be copied but also the first or second signal processing portion may be a essentially copy of the respective other signal processing portion (nevertheless, a signal processing portion may undergo additional modifications as discussed in connection with the blocks above).

Reuse of blocks allows to reduce the design effort.

Additional preferred embodiments are described in the dependent claims.

It should be noted that basically the above mentioned embodiments of the invention can be arbitrarily combined. Furthermore, it should be noted that the disclosure of the invention also covers other claim combinations than the claim combinations which are explicitly given by the back references in the dependent claims, i.e. the claims can be basically combined in any order.

A second aspect of the application relates to a method for receiving optical burst. The method steps correspond to the components of the receiver according to the first aspect of the application.

Accordingly, the method comprises to process a signal derived from an optical burst, thereby determining initial reception parameters. In parallel to signal processing, the signal is buffered in a buffer. The signal from the buffer is processed to generate a second signal, wherein the processing is initialized with the initial reception parameters and refines the initial reception parameters. The second signal is preferably a recovered version of the buffered signal. Based on the second signal, symbol identification is performed.

The above remarks related to the first aspect of the application are also applicable to the second aspect of the application.

The invention is explained below only in exemplary manner and with reference to the accompanying drawings, wherein

Fig. 1    illustrates an embodiment of a coherent receiver for receiving an opti- cal signal using PDM;

Fig. 2    illustrates an exemplary conventional data processing flowchart per- formed in a digital signal processing unit, such as the digital processing unit in the receiver of Fig. 1;

Fig. 3    illustrates an exemplary embodiment of a conventional polarization demultiplexer comprising four FIR filters;

Fig. 4    illustrates a first inventive embodiment of the data processing per- formed in a digital signal processing unit, such as the digital processing unit in the receiver of Fig. 1;

Fig. 5    illustrates an exemplary conventional data processing flowchart per- formed in a digital signal processing unit, such as the digital processing unit in the receiver of Fig. 1; and

Fig. 6    illustrates a second inventive embodiment of the data processing per- formed in a digital signal processing unit, such as the digital processing unit in the receiver of Fig. 1.

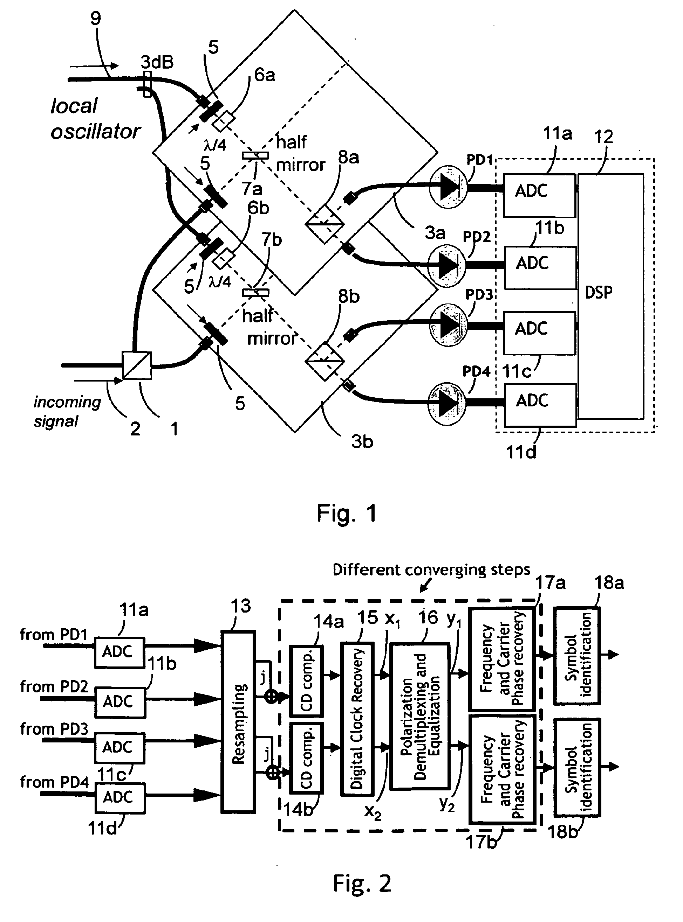

Fig. 1 shows an embodiment of a conventional coherent receiver for receiving an optical signal using PDM, e.g. the receiver may be used for receiving a PDM-QPSK signal. The receiver is configured to generate in-phase and quadrature-phase components of the downconverted received signal for two orthogonal polarizations.

The receiver comprises a polarization beam splitter (PBS) 1, which splits the received optical signal 2 into a first optical wave and a second optical wave, with the polarizations of the first and second optical waves being orthogonal. The signals of the first and second optical waves typically do not correspond to the two multiplexed signals of the transmitted polarization multiplexed signal.

The first optical wave is fed to a first coherent demodulator 3a, whereas the second optical wave is fed to a second coherent demodulator 3b. Both the first coherent demodulator 3a and the second coherent demodulator 3b receive a local oscillator (LO) signal 9 for superimposing the first optical wave and the second optical wave with the LO signal 9, respectively. Typically, there is a frequency offset between the received carrier wave 2 and the LO signal 9.

Polarizers 5 at the inputs of the demodulators 3a and 3b can be used to improve the polarization quality. Subsequently to polarizers 5, at the LO input of both demodulators 3a, 3b a $\lambda$/4 wave plate 6a, 6b is provided. The wave plates 6a, 6b are used for making the polarization of the LO signal 9 circular, while the signal remains linearly polarized. After passing through half mirrors 7a, 7b for superimposing the LO signal 9 and received signals, PBS 8a, 8b are used for each generating two orthogonal phases. The polarization angle of the signal when hitting half mirrors 7a, 7b is 45° with respect to the principal axis of PBS 8a, 8b.

The four outputs of the two demodulators 3a, 3b are coupled to the inputs of four photodiodes PD1-4, thereby generating four electrical currents. The beat term of the current of photodiode PD1 corresponds to the quadrature-phase component of a first polarization of the downconverted signal. The first polarization corresponds to the polarization of the first wave as generated by PBS 1. The beat term of the current of photodiode PD2 corresponds to the in-phase component of the first polarization of the downconverted signal. The beat term of the current of photodiode PD3 corresponds to the quadrature-phase component of a second polarization of the down-converted signal. The second polarization corresponds to the polarization of the second wave as generated by PBS 1. The beat term of the current of photodiode PD4 corresponds to the in-phase component of the second polarization of the down-converted signal.

The four output signals of the photodiodes PD1-PD4 are fed to four ADCs (analog-to-digital converter) 11a-11d. The sampled signals of the ADCs 11a-11d are fed to a digital signal processing unit 12. The digital signal processing unit 12 may be realized by a software programmable digital signal processor or by dedicated hardware or by a combination of both. Preferably, the digital signal processing unit 12 is integrated on an ASIC (application specific integrated circuit).

Instead of using four photodiodes PD1-PD4, four balanced photodetectors may be used, with each balanced photodetectors including two photodiodes. Each balanced photodetector is associated with an ADC. Each photodetector is connected to two fibers, one fiber for one photodiode and the other fiber for the other photodiode. The output current of such balanced detector is proportional to the difference of the currents of the two photodiodes. The additional optical signals (the optical signals need to be doubled) may be generated by using additional PBSs similar to PBSs 8a, 8b (the additional PBSs may be placed at the unused other dashed lines after the half mirrors 7a, 7b).

Fig. 2 illustrates an exemplary flowchart of the signal processing performed by a digital signal processing unit 12 in a coherent receiver, such as the coherent receiver shown in Fig. 1.

The signals from the photodiodes PD1-PD4 are fed to a corresponding number of ADCs (here: four ADCs). Optionally, the output signals from the ADCs 11a-11d may undergo resampling in block 13. Resampling may be used in case the sampling rate of the ADC is not synchronized with the symbol rate.

The digital (resampled) output signal of ADC 11a (corresponding to the quadrature-phase component) is multiplied by "j" ("j" is the complex number such that $j^2 = -1$) and added to the digital (resampled) output signal of ADC 11b (corresponding to the in-phase component). Similarly, the digital (resampled) output signal of ADC 11c (corresponding to the quadrature-phase component) is multiplied by "j" and added to the digital output signal of ADC 11d (corresponding to the in-phase component). The two resulting complex signals are fed in two CD (chromatic dispersion) compensation blocks 14a, 14b for compensating CD in the digital domain. The two output signals of the CD compensation blocks 14a, 14b are used for digital clock recovery 15. The resulting signals $x_1$ and $x_2$ undergo polarization demultiplexing and equalization in block 16.

Basically, polarization demultiplexing is used to rotate the received signal components $x_1$, $x_2$ for recovering the initial polarization components as multiplexed in the transmitter.

A basic rotation function of a polarization demultiplexer having output signals $y_1$, $y_2$ (which should correspond to the original polarization components) may be specified as:

$$\begin{pmatrix} y_1(k) \\ y_2(k) \end{pmatrix} = \begin{pmatrix} \cos\theta\, x_1(k) + \sin\theta\, x_2(k) \\ -\sin\theta\, x_1(k) + \cos\theta\, x_2(k) \end{pmatrix} = \begin{pmatrix} \cos\theta & \sin\theta \\ -\sin\theta & \cos\theta \end{pmatrix}\begin{pmatrix} x_1(k) \\ x_2(k) \end{pmatrix} = \begin{pmatrix} h_{11} & h_{12} \\ h_{21} & h_{22} \end{pmatrix}\begin{pmatrix} x_1(k) \\ x_2(k) \end{pmatrix}$$

The elements $h_{ij}$ of the rotation matrix represent the coefficients of an adaptive filter, which may be determined by an adaptive algorithm (such as the constant modulus algorithm).

To improve the accuracy of the filter and to use the filter also for signal equalization, the filter preferably does not simply describe a rotation matrix but information from neighboring samples around the main samples is also taken into account.

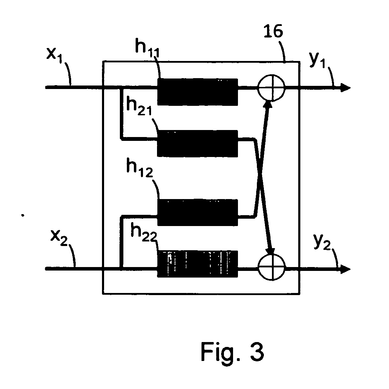

Such filter may be formed by four FIR filters $h_{11}$, $h_{12}$, $h_{21}$, and $h_{22}$ in a butterfly structure as exemplarily shown in Fig. 3. In Fig. 3, each of the four FIR filters $h_{11}$, $h_{12}$, $h_{21}$, and $h_{22}$ has 9 filter taps.

Instead of using four multi-tap FIR filters for polarization demultiplexing and equalization shown in Fig. 3, four single-tap FIR filters in a butterfly structure may be used for polarization demultiplexing, which are followed by an equalizer. Alternatively, the equalizer may be connected upstream of the single-tap FIR filters. Further, in both latter cases the separate equalizer may be formed by two FIR filters (one FIR filter per signal path) or four FIR filters in a butterfly structure.

The filter coefficients may be adapted by using the CMA (constant modulus algorithm). As discussed above, the CMA is based on the idea that the amplitude of a PSK modulated signal is constant and thus minimizes - in a mean squares sense - the error between the actual amplitude and the expected constant amplitude. Thus, two CMAs evaluate the output signals $y_1$ and $y_2$ and seek to minimize the errors of both signals by iteratively adapting the filter coefficients. Each CMA needs time to convergence to a sufficiently accurate solution.

Since there is an offset in frequency and phase between the LO signal 9 and the incoming optical signal 2, the frequency offset and the phase offset are estimated and compensated in blocks 17a, b of Fig. 2. The offset estimation and compensation is performed for the two polarizations in separate blocks 17a, b. Based on the offset compensated signals, the symbols in the two polarizations are detected in blocks 18a, b.

In a traditional optical circuit environment, the algorithms in a coherent receiver have no need to be optimized for a fast convergence time. However, in an optical packet (burst) network, the convergence time is a crucial parameter. Due to the variability of the transmission path, each optical packet may undergo different physical conditions. Therefore, all the "convergence phase" may be run at each packet arrival.

The simplest idea to perform burst-mode detection with a coherent detector is to add a number of training symbols at the beginning of the optical packet, which are used for determining the reception parameters. However, this approach reduces the net data rate as discussed above.

When considering the classical scheme of the digital signal processor algorithm of the coherent-detection receiver (such as the receiver shown in Fig. 2), it is evident that the blocks in which adaptive filtering and parameters estimation take place are limited. In Fig. 2, mainly the "Polarization Demultiplexing and Equalization" block 16 and "Frequency and Carrier Phase Recovery" blocks 17a, b are affected by the problem of slow convergence time.

In a more general way, the "slow" blocks, i.e. the blocks which need noticeable time for parameters estimation and adaption (e.g. a time period of 100 symbols or more), are part of a bigger set which is called "converging box" or "converging signal processing portion". In Fig. 2, an exemplary converging signal processing portion 20 is indicated by a dotted rectangle.

The teaching in this application allows to exploit the beginning of a packet, for both the "converging phase" and data detection, i.e. the beginning of a packet contains already unknown transport data, such as payload data. In this way there would not be the need for a converging preamble which is used for estimating the reception parameters but not used for actual data transport.

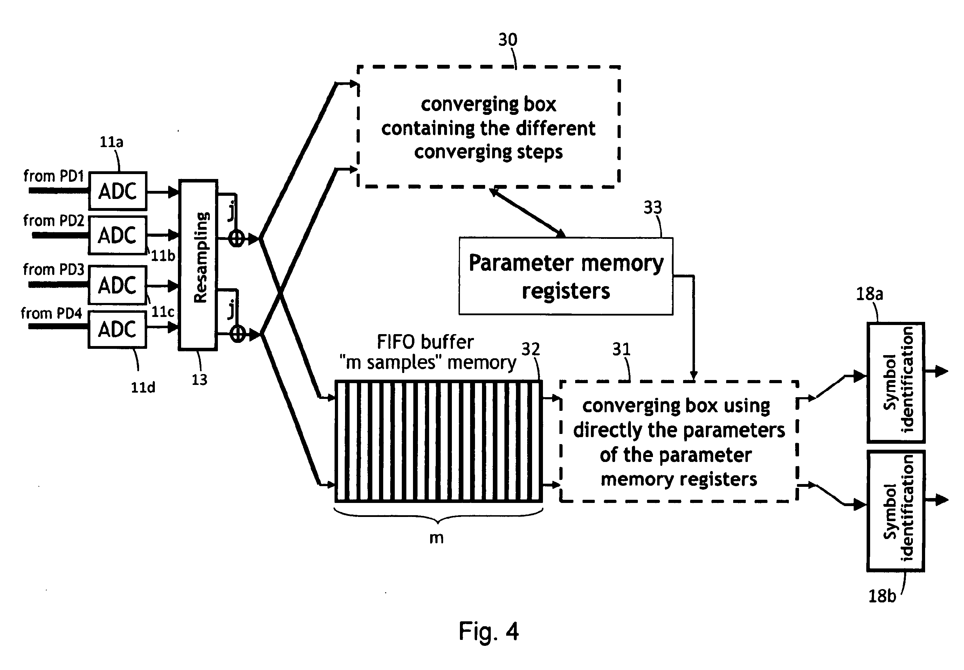

This objective may be achieved by duplicating the converging box, i.e. having two converging signal processing portions 30, 31. This is shown in Fig. 4.

The first converging signal processing portion 30 is preferably directly connected to the last block of what remains outside the converging portion, e.g. the resampling block 13 in Fig. 4.

The second converging signal processing portion 31 preferably receives the same input (e.g. the output of the resampling block 13) delayed by a certain amount of time thanks to a buffer memory, preferably a FIFO memory 32. This FIFO memory 32 is typically realized in form of a shift register having a length of m per input. Thus, the FIFO memory 32 buffers m samples per input.

The first converging signal processing portion 30 determines reception parameters. The second convergence signal processing portion 31 uses the reception parameters previously established in order to compensate for the physical impairments, i.e. for signal recovery.

The reception parameters determined by the first signal processing portion 30 may be optionally stored in a parameter memory 33, such as parameter memory registers. The second signal processing portion is then configured to receive stored initial reception parameters from the parameter memory. Alternatively, the reception parameters are directly transferred from the first signal processing portion 30 to the second signal processing portion 31 without using an additional parameter memory 33.

Preferably, the second convergence signal processing portion 31 uses the reception parameters from the first converging signal processing portion 30 only as initial reception parameters and is initialized with these initial reception parameters. The second convergence signal processing portion 31 then further adapts the initial reception parameters. Thus, the second convergence signal processing portion 32 may use the initial reception parameters as a good starting point and starts further convergence based thereon. Alternatively, the second convergence signal processing portion 31 does not converge but only applies the parameters previously determined. It may be also possible that some blocks of the second convergence signal processing portion 31 use the reception parameters only as initial reception parameters and further adapt or update these parameters, whereas other blocks of the second convergence signal processing portion 31 use the parameters without further parameter refinement.

In order to wait for the parameters to be calculated, the samples of the received signal will traverse the FIFO memory 32 before reaching the second signal processing portion 32. The sample memory capacity of the buffer should preferably correspond at least to the number of samples required by the first convergence signal processing portion 31 to determine the reception parameters.

Thanks to this concept, coherent detection can be used for burst-mode traffic.

The concept in Fig. 4 allows that the pre-amble of an optical packet is not lost anymore (as compared to the previous real-time scheme) because the optical packet is correctly and entirely decoded by the detecting path (i.e. the second convergence signal processing portion 31 in Fig. 4) that knows the correct parameters to do so. When the determining process of the reception parameters is carried out with actual data, the optical packet capacity is better used.

The convergence process is "blind". It means that it consists in series of operations that have no feedback on the convergence state. The system designer considers that the convergence status is good after a given amount of samples have been processed. When the number of samples used to converge increases, the accuracy level of the parameter is more reliable. But as mentioned before if the preamble is processed in real-time, the capacity corresponding to this pre-amble is lost for the real capacity of the packet. When using two converging signal processing portions as shown in Fig. 4, there is no more length constraint for the portion of the optical packet that is used for determining the (initial) reception parameters. The evaluated portion of the optical packet used for determining the (initial) reception parameters may be as long as needed to guarantee a perfect quality of the parameters without any trade-off with the packet capacity (since this portion of the packet can be used for data transport).

When implementing this concept in an ASIC (application specific integrated circuit), the FIFO buffer and two signal processing portions requires more hardware resources than a conventional approach. However, this drawback will become pointless with further technological progress in semiconductor technology, allowing to increase the number of transistors and logical gates.

Moreover, it possible to reduce the size of that portion that is more or less doubled in the ASIC. E.g. the blocks 14a-b consume the biggest part of the converging box 20 with respect to transistor count. By using techniques described below, one can avoid doubling this part and so considerably reduce the oversize due to doubling. There exist techniques where the values of the parameters derived in the chromatic dispersion compensation are known in advance, i.e. the parameters do not need to be determined by a converging algorithm after receipt of a new packet. In this case, the chromatic dispersion compensation may be arranged upstream of the first signal processing portion 30 and the FIFO buffer 32. Such techniques are described in the Applicant's European application 09290325.1 filed on May 5, 2009. The disclosure of this European application is hereby incorporated by reference. According to one exemplary technique disclosed therein, at least one given travelling parameter is associated with a received optical burst. Such travelling parameter may be an identifier of the travelling path or an identifier of the transmitter. The travelling parameter may be transmitted in the header of the optical packet or in a control optical packet transmitted on a dedicated control channel. The receiver may be adapted to determine said at least one travelling parameter and to adapt the settings of said chromatic dispersion compensation filter in function of a previous setting applied when receiving an optical burst having a similar at least one travelling parameter.

It may be possible to use algorithms that converge in faster way. However, the implementation in an ASIC results in other problems. The proposed solution, however, allows the use conventional algorithms (such as the CMA) since the FIFO memory and the use of two signal processing portions compensate for any slowness in convergence time.

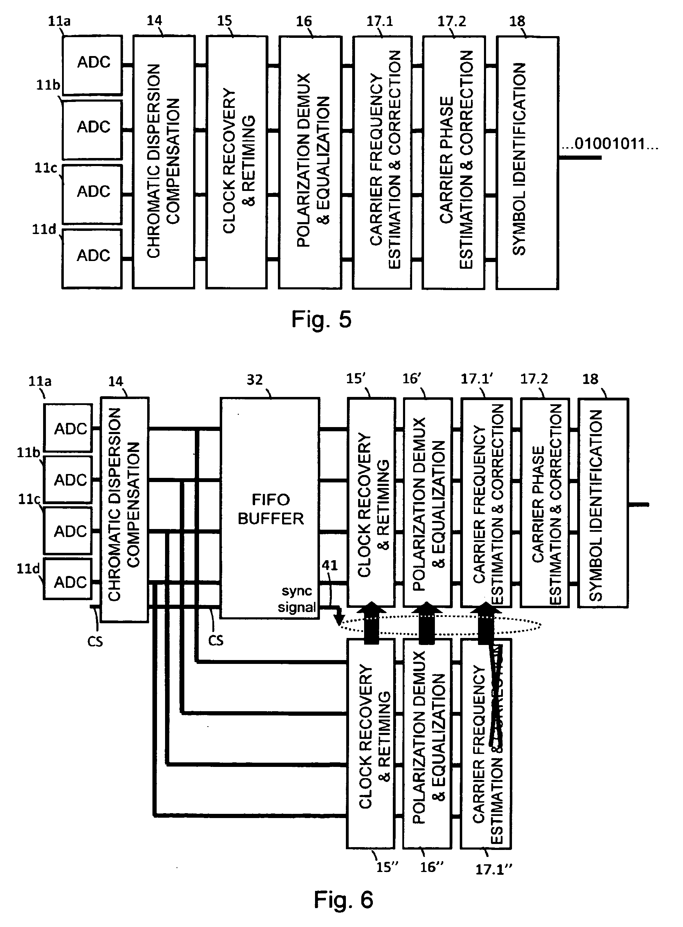

Fig. 5 illustrates an alternative embodiment for the algorithms present in the digital signal processing unit 11 of a conventional coherent receiver. The embodiment in Fig. 5 is similar to the embodiment in Fig. 2. Figurative elements in Figs. 2 and 5 denoted by the same reference signs are basically the same. The remarks related to Fig. 2 also apply to Fig. 5. The four received signal components in Fig. 5 correspond to the two complex signal components of Fig. 2. The two single CD compensation blocks 14a, 14b in Fig. 2 correspond to the common block 14 in Fig. 5. The two symbol identification blocks 18a, 18b correspond to the common block 18 in Fig. 5. The blocks 17a, 17b in Fig. 2 correspond to the two blocks 17.1 and 17.2 in Fig. 5. In Fig. 5, the blocks 15, 16 and 17.1 need considerable time for adaption to a new optical packet (e.g. a time duration of more than 100 symbols) or - in other words - need time to sufficiently converge. These blocks are preferably blocks with memory: the block's output is preferably a function of the input and of a state or memory of the algorithm; the algorithm preferably updates the output and its own state with two separate functions. Before adaption or convergence, the symbols cannot be correctly detected and are lost. Thus, the lost symbols cannot be used for data transport. Therefore, the problem of the embodiment in Fig. 2 in connection with burst-mode operation also applies for the embodiment in Fig. 5. In Fig. 5, the blocks different from blocks 15, 16, and 17.1 are "quick", i.e. these blocks are instantaneously operative. E.g. the dispersion compensation block 14 may be designed to know in advance the compensation parameters (i.e. without convergence of the algorithm when receiving a new optical packet) and thus may be ready for dispersion compensation when receiving the new optical packet. This was already discussed above. Also, the carrier phase estimation may be designed to need only e.g. 1-2 bits or symbols for determining the phase offset.

Fig. 6 illustrates a modified signal processing flow having two signal processing portions and a FIFO buffer similar to the concept shown in Fig. 4. The blocks 15", 16" and 17.1" are essentially a copy of the blocks 15, 16, 17.1 in Fig. 5 (these blocks 15", 16" and 17.1" are possibly slightly modified in comparison to Fig. 5 for forwarding the reception parameters). These blocks 15", 16" and 17.1" start to converge or to adapt to a new optical packet when a new packet arrives. Moreover, it is possible to omit the correction (= compensation) part in block 17.1" since there is no block downstream of block 17.1" that has to receive a frequency compensated signal (this is indicated by strikethrough of "correction" in block 17.1").

The upper blocks 15', 16' and 17.1' downstream of the FIFO memory 32 are modified in comparison to the blocks 15, 16, 17.1 in Fig. 5: These blocks 15', 16' and 17.1' are able to start from an initial state determined by the blocks 15", 16" and 17.1". In other words: the upper blocks 15', 16' and 17.1' are initialized by initial reception parameters (see vertical arrows in Fig. 6) determined by the lower blocks 15", 16" and 17.1". E.g. block 15' may receive a parameter indicating a phase value.

The upper blocks 15', 16' and 17.1' which are located after the FIFO memory 32 are referred to as detecting blocks. The detecting blocks 15', 16' and 17.1' are indeed the blocks that are in the true detection path which is used for symbol identification. The lower blocks 15", 16" and 17.1" that are arranged in parallel to the FIFO memory 32 are referred to as pre-detecting blocks (in fact, these blocks 15", 16" and 17.1" do not take part in the actual detection of the received signal but these blocks provide pre-estimation of the detector parameters.

The pre-detecting blocks 15", 16" and 17.1" form a signal processing portion similar to the signal processing portion 30 in Fig. 4. The detecting blocks 15', 16' and 17.1' form a signal processing portion similar to the signal processing portion 31 in Fig. 4.

Optionally, a parameter memory 33 as shown in Fig. 4 may be used for transferring the parameters from the pre-detecting blocks 15", 16" and 17.1" to the detecting blocks 15', 16', and 17.1'.

When the FIFO memory 32 is full, the detecting blocks 15', 16' and 17.1' can read the parameter memory in the pre-detecting blocks 15", 16" and 17.1", e.g. the parameter memory of the filters in the pre-detecting blocks 15", 16" and 17.1". These readout parameters can be used as a good starting point for the detecting blocks 15', 16' and 17.1'. Preferably, the detecting blocks 15', 16' and 17.1' then further refine the parameters. E.g. a CMA may be used in block 15', with the CMA being initialized with filter parameters from block 15". These filter parameters are initial filter parameters and are further adapted or updated.

Transferring of the reception parameters from the pre-detecting blocks 15", 16" and 17.1" to the detecting blocks 15', 16' and 17.1' may be triggered by a sync signal 41. Preferably, the sync signal triggers the transfer when the FIFO buffer 32 is full (or when the filling level reaches a predetermined level).

Preferably, not only the pre-detecting blocks 15", 16" and 17" have the "convergence feature" but also the detecting blocks 15', 16' and 17.1' have the "convergence feature". In other words: the detecting blocks 15', 16' and 17.1' use the received initial parameters for further adaption of the parameters. In case only the pre-detecting blocks 15", 16" and 17" have such a feature and the parameters are continuously transferred from the pre-detecting blocks 15", 16" and 17" to the detecting blocks 15', 16' and 17.1', this may lead to a drawback: at the end of each packet the detecting blocks 15', 16' and 17.1' may apply "random" parameters because there no more actual packet on the pre-detecting blocks 15", 16" and 17" even if there is still an actual packet in the detecting blocks 15', 16' and 17.1' due to the time shift caused by the FIFO memory 32. To avoid such situation, preferably some intelligence is added somewhere in the scheme. The best solution is that the detecting blocks 15', 16' and 17.1' have the convergence feature.

Preferably, the detecting blocks 15', 16' and 17.1' become independent from the initial reception parameters sent by the pre-detecting blocks 15", 16" and 17" as soon as possible. But every timing aspect is related to the packet duration. For considering the packet duration, the receiver may use carrier sensing (CS) functionality. This well-know term refers to the ability of detecting the presence or absence of an incoming signal 2. This could be done by using an external photodiode that senses the optical power. This photodiode is preferably located before the mixers; e.g., this photodiode can be located after a tap coupler just before the element 1 of Fig. 1. Alternatively, the sum of the square of the four signals coming from the photodiodes (in this case balanced photodetectors are used as discussed above) may be considered. Preferably, the four digital signals after the ADCs are used.

The presence/absence of the carrier may be encoded in a CS signal, e.g. the CS signal may need only 1 bit of information (the signal is 1 bit wide). Fig. 6 shows such a CS signal. The CS signal preferably propagates together with the four sampled signals containing packet information through one or more blocks (e.g. the block 14 in Fig. 32) of the signal processing unit, in particular through the FIFO memory 32. In such a block, the delay should be preferably (at least roughly) the same for the CS signal and the sampled signals.

By using the CS signal two very important actions may be timed to be done at the optimal moment:

1. When the CS signal indicates that a new packet is about to enter the pre-detecting blocks, then these pre-detecting blocks are preferably reset, e.g. the internal state, memory or estimated parameters may be reset to a predefined initial state or initial value(s). The reset speeds up the convergence process for determining the initial reception parameters for the new optical packet.

2. When the CS signal propagates inside the FIFO memory 32 it takes the same delay as the other signals. When the CS signal reaches the output of the FIFO buffer 32, the packet information as well reaches the output (i.e. the CS signal and the received signal reach essentially simultaneously the output of the FIFO 32). The CS signal at the output of the FIFO buffer can be used as a sync signal 41 shown in Fig. 6. The sync signal 41 triggers the transmission of the parameters from the pre-detecting blocks to the detecting blocks.

## Claims

1. An optical burst-mode coherent-detection receiver for receiving optical bursts, the receiver comprising:

   - a first signal processing portion (30; 15", 16", 17.1") configured to receive a signal derived from an optical burst, the first signal processing portion (30; 15", 16", 17.1") configured to determine initial values of reception parameters; wherein the reception parameters include parameters for compensating physical impairments;
- a buffer (32) configured to parallel buffer the signal;
- a second signal processing portion (31; 15', 16', 17.1') downstream of the buffer (32), the second signal processing portion (31; 15', 16', 17.1') configured to

- receive the initial values of reception parameters,
- initialize the reception parameters with the initial values,
- further refine the reception parameters, and
- process the signal downstream of the buffer based on the reception parameters;

and
- a symbol identification block (18a, 18b; 18) downstream of the second signal processing portion (31; 15', 16', 17.1').

2. The receiver of claim 1, wherein the buffer (32) is a FIFO memory.

3. The receiver of claim 1, wherein the reception parameters include parameters selected from the group of:

- one or more parameters for polarization demultiplexing and/or signal equalization,
- one or more parameters for carrier frequency offset compensation,
- one or more parameters for carrier phase offset compensation ,
- one or more parameters for clock recovery and/or retiming, and
- one or more parameters for chromatic dispersion compensation.

4. The receiver of claim 1, wherein

- the first (30; 15", 16", 17.1") and the second (31; 15', 16', 17.1') signal processing portions include a polarization demultiplexer and/or signal equalizer block (16', 16"), with the block (16') in the second signal processing portion being configured to receive initial values of reception parameters determined by the block (16") in the first signal processing portion,
- both the first (30; 15", 16", 17.1") and the second (31; 15', 16', 17.1') signal processing portions include a block (17.1', 17.1") for carrier frequency offset estimation, with the block (17.1') in the second signal processing portion being configured to receive initial values of reception parameters determined by the block (17.1") in the first signal processing portion,
- both the first (30; 15", 16", 17.1") and the second (31; 15', 16', 17.1') signal processing portions include a block for carrier phase offset estimation, with the block in the second signal processing portion being configured to receive initial values of reception parameters determined by the block in the first signal processing portion,
- both the first (30; 15", 16", 17.1") and the second (31; 15', 16', 17.1') signal processing portions include a block (15', 15") for clock recovery and/or retiming, with the block (15') in the second signal processing portion being configured to receive initial values of reception parameters determined by the block (15") in the first signal processing portion, and/or
- both the first (30; 15", 16", 17.1") and the second (31; 15', 16', 17.1') signal processing portions include a chromatic dispersion compensator block (14), with the block in the second signal processing portion being configured to receive initial values of reception parameters determined by the block in the first signal processing portion.

5. The receiver of claim 1, wherein

- both the first (30; 15", 16", 17.1") and the second (31; 15', 16', 17.1') signal processing portions include a block (15', 15") for clock recovery and/or retiming, with the block (15') in the second signal processing portion being configured to receive initial values of reception parameters determined by the block (15") in the first signal processing portion,
- both the first (30; 15", 16", 17.1") and the second (31; 15', 16', 17.1') signal processing portions include a polarization demultiplexing and/or signal equalizer block (16', 16"), with the block (16') in the second signal processing portion being configured to receive initial values of reception parameters determined by the block (16") in the first signal processing portion, and
- both the first and the second signal processing portions include a block (17.1', 17.1") for carrier frequency offset estimation, with the block (17.1') in the second signal processing portion being configured to receive initial values of reception parameters determined by the block (17.1") in the first signal processing portion.

6. The receiver of claim 4, wherein at least a part of said block included in the first signal processing portion (31; 15', 16', 17.1') is essentially a copy of a block in the second signal processing portion (30; 15", 16", 17.1") or vice versa.

7. The receiver of claim 2, wherein the receiver is configured to determine a carrier sensing signal indicating the presence of an optical carrier.

8. The receiver of claim 7, wherein the FIFO memory (32) further receives the carrier sensing signal and is configured to buffer the carrier sensing signal.

9. The receiver of claim 8, wherein the receiver is configured such that the carrier sensing signal (41) at the output of the FIFO memory (32) triggers transfer of the initial values of reception parameters from the first signal processing portion (30; 15",16",17.1") to the second signal processing portion (31; 15', 16', 17.1').

10. The receiver of claim 2, wherein the FIFO memory (32) is configured to output a trigger signal (41) triggering the transfer of the initial values of reception parameters from the first signal processing portion (30; 15", 16", 17.1") to the second signal processing portion (31; 15', 16', 17.1'), the trigger signal (41) triggering the transfer when the FIFO memory (32) is full or reaches a predetermined filling level.

11. The receiver of claim 7, wherein the first signal processing portion (30; 15", 16", 17.1") is reset when the carrier sensing signal (40) indicates that a new burst enters the first processing portion (30; 15", 16", 17.1").

12. The receiver of claim 1, further comprising:

   - a parameter memory (33) configured to store the initial values of reception parameters, wherein the second signal processing portion (31; 15', 16', 17.1') is configured to receive stored initial values of reception parameters from the parameter memory (33).

13. The receiver of claim 2, wherein the first signal processing portion (30; 15", 16", 17.1"), the second signal processing portion (31; 15', 16', 17.1') and the FIFO memory (32) are digital blocks, and the length of the FIFO memory corresponds at least to the number of sequential signal samples which are required by the first signal processing portion (30; 15", 16", 17.1") to determine the initial values of reception parameters.

14. The receiver of claim 1, wherein a received optical burst is associated with at least one given travelling parameter, and the receiver further comprises:

   - a chromatic dispersion compensator (14) upstream of the buffer and the first signal processing portion, wherein the settings of said chromatic dispersion compensation filter are adapted in function of a previous setting applied when receiving an optical burst having a similar at least one travelling parameter.

15. A method for coherently receiving optical burst, the method comprising:

   - processing a signal derived from an optical burst to determine initial values of reception parameters; wherein the reception parameters include parameters for compensating physical impairments;
   - in parallel to signal processing, buffering the signal in a buffer (32);
   - processing the signal from the buffer to generate a second signal, wherein the processing is based on the reception parameters and comprises: initializing the reception parameters with the initial values of reception parameters, and further refining the reception parameters; and
   - based on the second signal, performing symbol identification.

**Patentansprüche**

1. Optischer Burstmodus-Empfänger zur Kohärenzerkennung für den Empfang von optischen Bursts, wobei der Empfänger umfasst:

   - Einen ersten Signalverarbeitungsabschnitt (30; 15", 16", 17.1 "), welcher für den Empfang eines von einem optischen Burst abgeleiteten Signals konfiguriert ist, wobei der besagte erste Signalverarbeitungsabschnitt (30; 15", 16", 17.1") dafür konfiguriert ist, Anfangswerte von Empfangsparametern zu bestimmen; wobei die Empfangsparameter Parameter zum Kompensieren von physikalischen Beeinträchtigungen umfassen;
- einen Puffer (32), welcher dafür konfiguriert ist, das Signal parallel zu puffern;
- einen zweiten Signalverarbeitungsabschnitt (31; 15', 16', 17.1'), der dem Puffer (32) nachgelagert angeordnet ist, wobei der zweite Signalverarbeitungsabschnitt (31; 15', 16', 17.1') konfiguriert ist für

- den Empfang der Anfangswerten von Empfangsparametern,
- die Initialisierung der Empfangsparameter mit den Anfangswerten,
- das weitere Verfeinern der Empfangsparameter, und
- die Verarbeitung des Signals stromabwärts des Puffers auf der Basis der Empfangsparameter;

und
- einen Symbolidentifikationsblock (18a, 18b; 18) stromabwärts des zweiten Signalverarbeitungsabschnitts (31; 15', 16', 17.1').

2. Empfänger nach Anspruch 1, wobei der Puffer (32) ein FIFO-Speicher ist.

3. Empfänger nach Anspruch 1, wobei die Empfangsparameter aus der folgenden Gruppe gewählte Parameter umfassen:

- einen oder mehrere Parameter zum Polarisationsdemultiplex und/oder zur Signalentzerrung,
- einen oder mehrere Parameter zur Kompensation der Trägerfrequenzverschiebung,
- einen oder mehrere Parameter zur Kompensation der Trägerphasenverschiebung,
- einen oder mehrere Parameter zur Taktrückgewinnung und/oder Neueinstellung des Taktes, und
- einen oder mehrere Parameter zur Kompensation der chromatischen Dispersion.

4. Empfänger nach Anspruch 1, wobei

- der erste (30; 15", 16", 17.1") und der zweite (31; 15', 16', 17.1') Signalverarbeitungsabschnitt einen Polarisationsdemultiplex- und/oder Signalentzerrungsblock (16', 16") umfassen, wobei der Block (16') in dem zweiten Signalverarbeitungsabschnitt für den Empfang von Anfangswerten von Empfangsparametern, die von dem Block (16") in dem ersten Signalverarbeitungsabschnitt bestimmt werden, konfiguriert sind,
- sowohl der erste (30; 15", 16", 17.1") als auch der zweite (31; 15', 16', 17.1') Signalverarbeitungsabschnitt einen Block (17.1', 17.1") für die Schätzung der Trägerfrequenzverschiebung umfassen, wobei der Block (17.1') in dem zweiten Signalverarbeitungsabschnitt für den Empfang von Anfangswerten von von dem Block (17.1 ") in dem ersten Signalverarbeitungsabschnitt bestimmten Empfangsparametern konfiguriert ist,
- sowohl der erste (30; 15", 16", 17.1") als auch der zweite (31; 15', 16', 17.1') Signalverarbeitungsabschnitt einen Block (15.1', 15.1") für die Schätzung der Trägerphasenverschiebung umfassen, wobei der Block in dem zweiten Signalverarbeitungsabschnitt für den Empfang von Anfangswerten von von dem Block in dem ersten Signalverarbeitungsabschnitt bestimmten Empfangsparametern konfiguriert ist,
- sowohl der erste (30; 15", 16", 17.1") als auch der zweite (31; 15', 16', 17.1') Signalverarbeitungsabschnitt einen Block (15', 15") für die Taktrückgewinnung und/oder Neueinstellung des Taktes umfassen, wobei der Block (15') in dem zweiten Signalverarbeitungsabschnitt für den Empfang von Anfangswerten von von dem Block (15") in dem ersten Signalverarbeitungsabschnitt bestimmten Empfangsparametern konfiguriert ist, und/ oder
- sowohl der erste (30; 15", 16", 17.1") als auch der zweite (31; 15', 16', 17.1') Signalverarbeitungsabschnitt einen Kompensatorblock für die chromatische Dispersion (14) umfassen, wobei der Block in dem zweiten Signalverarbeitungsabschnitt für den Empfang von Anfangswerten von von dem Block in dem ersten Signalverarbeitungsabschnitt bestimmten Empfangsparametern konfiguriert ist.

5. Empfänger nach Anspruch 1, wobei

- sowohl der erste (30; 15", 16", 17.1") als auch der zweite (31; 15', 16', 17.1') Signalverarbeitungsabschnitt einen Block (15', 15") für die Taktrückgewinnung und/oder Neueinstellung des Taktes umfassen, wobei der Block (15') in dem zweiten Signalverarbeitungsabschnitt für den Empfang von Anfangswerten von von dem Block (15") in dem ersten Signalverarbeitungsabschnitt bestimmten Empfangsparametern konfiguriert ist,
- sowohl der erste (30; 15", 16", 17.1") als auch der zweite (31; 15', 16', 17.1') Signalverarbeitungsabschnitt einen Polarisationsdemultiplex- und/oder Signalentzerrungsblock (16', 16") umfassen, wobei der Block (16') in dem zweiten Signalverarbeitungsabschnitt für den Empfang von Anfangswerten von Empfangsparametern, die von dem Block (16") in dem ersten Signalverarbeitungsabschnitt bestimmt werden, konfiguriert ist, und
- sowohl der erste als auch der zweite Signalverarbeitungsabschnitt einen Block (17.1', 17.1") für die Schätzung der Trägerfrequenzverschiebung umfassen, wobei der Block (17.1') in dem zweiten Signalverarbeitungsabschnitt für den Empfang von Anfangswerten von von dem Block (17.1") in dem ersten Signalverarbeitungsabschnitt bestimmten Empfangsparametern konfiguriert ist.

6. Empfänger nach Anspruch 4, wobei mindestens ein Teil des besagten in dem ersten Signalverarbeitungsabschnitt (31, 15', 16', 17.1') umfassten Block im Wesentlichen eine Kopie eines Blocks in dem zweiten Signalverarbeitungsabschnitt (30; 15", 16", 17.1") ist, oder umgekehrt.

7. Empfänger nach Anspruch 2, wobei der Empfänger für das Ermitteln eines Trägerabtastsignals, welches das Vorhandensein eines optischen Trägers angibt, konfiguriert ist.

8. Empfänger nach Anspruch 7, wobei der FIFO-Speicher (32) weiterhin das Trägerabtastsignal empfängt und für das Puffern des Trägerabtastsignals konfiguriert ist.

9. Empfänger nach Anspruch 8, wobei der Empfänger derart konfiguriert ist, dass das Trägerabtastsignal (41) am Ausgang des FIFO-Speichers (32) die Übertragung des Ausgangswerts von Empfangsparametern von dem ersten Signalverarbeitungsabschnitt (30; 15", 16", 17.1") an den zweiten Signalverarbeitungsabschnitt (31; 15', 16', 17.1') triggert.

10. Empfänger nach Anspruch 2, wobei der FIFO-Speicher (32) für die Ausgabe eines Trigger-Signals (41), welches die Übertragung des Ausgangswerts von Empfangsparametern von dem ersten Signalverarbeitungsabschnitt (30; 15", 16", 17.1") an den zweiten Signalverarbeitungsabschnitt (31; 15', 16', 17.1') triggert, konfiguriert ist, wobei das Trigger-Signal (41) die Übertragung triggert, wenn der FIFO-Speicher (32) voll ist oder einen vorgegebenen Füllstand erreicht.

11. Empfänger nach Anspruch 7, wobei der erste Signalverarbeitungsabschnitt (30; 15", 16", 17.1") zurückgesetzt wird, wenn das Trägerabtastsignal (40) angibt, dass ein neuer Burst in dem ersten Verarbeitungsabschnitt (30; 15", 16", 17.1") eintrifft.

12. Empfänger nach Anspruch 1, weiterhin umfassend:

- Einen Parameterspeicher (33), welcher für das Speichern der Anfangswerte von Empfangsparametern konfiguriert ist, wobei der zweite Signalverarbeitungsabschnitt (31; 15', 16', 17.1') dafür konfiguriert ist, gespeicherte Anfangswerte von Empfangsparametern aus dem Parameterspeicher (33) zu empfangen.

13. Empfänger nach Anspruch 2, wobei der erste Signalverarbeitungsabschnitt (30; 15", 16", 17.1"), der zweite Signalverarbeitungsabschnitt (31; 15', 16', 17.1') und der FIFO-Speicher (32) digitale Blöcke sind, und wobei die Länge des FIFO-Speichers mindestens der Anzahl der sequentiellen Signalabtastungen, die von dem ersten Signalverarbeitungsabschnitt (30; 15", 16", 17.1") benötigt werden, um die Anfangswerte von Empfangsparametern zu bestimmen, entspricht.

14. Empfänger nach Anspruch 1, wobei ein empfangener optischer Burst mit mindestens einem gegebenen Travelling-Parameter assoziiert ist und der Empfänger weiterhin umfasst:

- Einen Kompensator für die chromatische Dispersion (14) stromaufwärts des Puffers und des ersten Signalverarbeitungsabschnitt, wobei die Einstellungen des besagten Filters zur Kompensation der chromatischen Dispersion gemäß einer vorherigen Einstellung, welche bei Empfang eines optischen Bursts mit einem ähnlichen mindestens einen Travelling-Parameter angewendet wurde, angepasst werden.

15. Verfahren für den kohärenten Empfang von optischen Bursts, wobei das Verfahren umfasst:

- Verarbeiten eines von einem optischen Burst abgeleiteten Signals, um Anfangswerte von Empfangsparametern zu bestimmen; wobei die Empfangsparameter Parameter zur Kompensation von physikalischen Beeinträchtigungen umfassen;

- parallel zur Signalverarbeitung, Zwischenspeichern des Signals in einem Puffer (32);
- Verarbeiten des Signals aus dem Puffer, um ein zweites Signal zu erzeugen, wobei die Verarbeitung auf den Empfangsparametern basiert und umfasst: Initialisieren der Empfangsparameter mit den Ausgangswerten von Empfangsparametern, und weiterhin Verfeinern der Empfangsparameter; und
- basierend auf dem zweiten Signal, Durchführen der Symbolidentifikation.

**Revendications**

1.  Récepteur de détection cohérente en mode rafale optique pour recevoir des rafales optiques, le récepteur comprenant :

    - une première partie de traitement de signal (30 ; 15", 16", 17,1") configurée pour recevoir un signal dérivé d'une rafale optique, la première partie de traitement de signal (30 ; 15", 16", 17,1") étant configurée pour déterminer des valeurs initiales de paramètres de réception ; dans lequel les paramètres de réception comprennent des paramètres pour compenser des altérations physiques ;
    - une mémoire tampon (32) configurée pour mettre en mémoire tampon le signal en parallèle ;
    - une deuxième partie de traitement de signal (31 ; 15', 16', 17,1') en aval de la mémoire tampon (32), la deuxième partie de traitement de signal (31 ; 15', 16', 17,1') étant configurée pour

        - recevoir les valeurs initiales de paramètres de réception,
        - initialiser les paramètres de réception avec les valeurs initiales,
        - affiner davantage les paramètres de réception, et
        - traiter le signal en aval de la mémoire tampon en se basant sur les paramètres de réception ;

    et
    - un bloc d'identification de symboles (18a, 18b ; 18) en aval de la deuxième partie de traitement de signal (31; 15', 16', 17.1').

2.  Récepteur selon la revendication 1, dans lequel la mémoire tampon (32) est une mémoire FIFO.

3.  Récepteur selon la revendication 1, dans lequel les paramètres de réception comprennent des paramètres sélectionnés dans le groupe constitué de :

    - un ou plusieurs paramètres pour le démultiplexage de polarisation et/ou l'égalisation de signaux,
    - un ou plusieurs paramètres pour la compensation de décalage de fréquence porteuse,
    - un ou plusieurs paramètres pour la compensation de décalage de phase porteuse,
    - un ou plusieurs paramètres pour la récupération d'horloge et/ou la re-synchronisation, et
    - un ou plusieurs paramètres pour la compensation de dispersion chromatique.

4.  Récepteur selon la revendication 1, dans lequel

    - la première (30 ; 15", 16", 17,1") et la deuxième (31 ; 15', 16', 17,1') parties de traitement de signal comprennent un bloc démultiplexeur de polarisation et/ou égaliseur de signaux (16', 16"), le bloc (16') dans la deuxième partie de traitement de signal étant configuré pour recevoir des valeurs initiales de paramètres de réception déterminées par le bloc (16") dans la première partie de traitement de signal,
    - la première (30 ; 15", 16", 17,1") et la deuxième (31 ; 15', 16', 17,1') parties de traitement de signal comprennent un bloc (17,1', 17,1"), pour l'estimation de décalage de fréquence porteuse, le bloc (17,1') dans la deuxième partie de traitement de signal étant configuré pour recevoir des valeurs initiales de paramètres de réception déterminées par le bloc (17,1") dans la première partie de traitement de signal,
    - la première (30 ; 15", 16", 17,1") et la deuxième (31 ; 15', 16', 17,1') parties de traitement de signal comprennent toutes deux un bloc pour l'estimation de décalage de phase porteuse, le bloc dans la deuxième partie de traitement de signal étant configuré pour recevoir des valeurs initiales de paramètres de réception déterminées par le bloc dans la première partie de traitement de signal,
    - la première (30 ; 15", 16", 17,1") et la deuxième (31 ; 15', 16', 17,1') parties de traitement de signal comprennent toutes deux un bloc (15', 15"), pour la récupération d'horloge et/ou la re-synchronisation, le bloc (15') dans la deuxième partie de traitement de signal étant configuré pour recevoir des valeurs initiales de paramètres de réception déterminées par le bloc (15") dans la première partie de traitement de signal, et/ou

- la première (30 ; 15", 16", 17,1") et la deuxième (31 ; 15', 16', 17,1') parties de traitement de signal comprennent toutes deux un bloc compensateur de dispersion chromatique (14), le bloc dans la deuxième partie de traitement de signal étant configuré pour recevoir des valeurs initiales de paramètres de réception déterminées par le bloc dans la première partie de traitement de signal.

**5.** Récepteur selon la revendication 1, dans lequel

- la première (30 ; 15", 16", 17,1") et la deuxième (31 ; 15', 16', 17,1') parties de traitement de signal comprennent toutes deux un bloc (15', 15"), pour la récupération d'horloge et/ou la re-synchronisation, le bloc (15') dans la deuxième partie de traitement de signal étant configuré pour recevoir des valeurs initiales de paramètres de réception déterminées par le bloc (15") dans la première partie de traitement de signal,
- la première (30 ; 15", 16", 17,1") et la deuxième (31 ; 15', 16', 17,1') parties de traitement de signal comprennent toutes deux un bloc démultiplexeur de polarisation et/ou égaliseur de signaux (16', 16"), le bloc (16') dans la deuxième partie de traitement de signal étant configuré pour recevoir des valeurs initiales de paramètres de réception déterminées par le bloc (16") dans la première partie de traitement de signal, et
- la première et la deuxième parties de traitement de signal comprennent toutes deux un bloc (17,1', 17,1"), pour l'estimation de décalage de fréquence porteuse, le bloc (17,1') dans la deuxième partie de traitement de signal étant configuré pour recevoir des valeurs initiales de paramètres de réception déterminées par le bloc (17,1") dans la première partie de traitement de signal.

**6.** Récepteur selon la revendication 4, dans lequel au moins une partie dudit bloc compris dans la première partie de traitement de signal (31 ; 15', 16', 17,1') est essentiellement une copie d'un bloc dans la deuxième partie de traitement de signal (30 ; 15", 16", 17,1 ") ou vice versa.

**7.** Récepteur selon la revendication 2, dans lequel le récepteur est configuré pour déterminer un signal de détection de porteuse indiquant la présence d'une porteuse optique.

**8.** Récepteur selon la revendication 7, dans lequel la mémoire FIFO (32) reçoit en outre le signal de détection de porteuse et est configuré pour mettre en mémoire tampon le signal de détection de porteuse.

**9.** Récepteur selon la revendication 8, dans lequel le récepteur est configuré de sorte que le signal de détection de porteuse (41) à la sortie de la mémoire FIFO (32) déclenche le transfert des valeurs initiales de paramètres de réception depuis la première partie de traitement de signal (30 ; 15", 16", 17,1") vers la deuxième partie de traitement de signal (31; 15', 16', 17.1').

**10.** Récepteur selon la revendication 2, dans lequel la mémoire FIFO (32) est configurée pour délivrer en sortie un signal de déclenchement (41) déclenchant le transfert des valeurs initiales de paramètres de réception depuis la première partie de traitement de signal (30 ; 15", 16", 17,1") vers la deuxième partie de traitement de signal (31 ; 15', 16', 17,1'), le signal de déclenchement (41) déclenchant le transfert lorsque la mémoire FIFO (32) est pleine ou atteint un niveau de remplissage prédéterminé.

**11.** Récepteur selon la revendication 7, dans lequel la première partie de traitement de signal (30 ; 15", 16", 17,1") est réinitialisée lorsque le signal de détection de porteuse (40) indique qu'une nouvelle rafale entre dans la première partie de traitement (30; 15", 16", 17.1 ").

**12.** Récepteur selon la revendication 1, comprenant en outre :

- une mémoire de paramètres (33) configurée pour stocker les valeurs initiales de paramètres de réception, dans lequel la deuxième partie de traitement de signal (31 ; 15', 16', 17,1') est configurée pour recevoir des valeurs initiales stockées de paramètres de réception provenant de la mémoire de paramètres (33).

**13.** Récepteur selon la revendication 2, dans lequel la première partie de traitement de signal (30 ; 15", 16", 17,1"), la deuxième partie de traitement de signal (31 ; 15', 16', 17.1') et la mémoire FIFO (32) sont des blocs numériques, et la longueur de la mémoire FIFO correspond au moins au nombre d'échantillons de signaux séquentiels qui sont requis par la première partie de traitement de signal (30 ; 15", 16", 17.1") pour déterminer les valeurs initiales de paramètres de réception.

**14.** Récepteur selon la revendication 1, dans lequel une rafale optique reçue est associée à au moins un paramètre de circulation donné, et le récepteur comprend en outre :

- un compensateur de dispersion chromatique (14) en amont de la mémoire tampon et de la première partie de traitement de signal, dans lequel les paramètres dudit filtre de compensation de dispersion chromatique sont adaptés en fonction d'un paramètre précédent appliqué lors de la réception d'une rafale optique présentant au moins un paramètre de circulation similaire.

15. Procédé de réception cohérente de rafale optique, le procédé comprenant les étapes suivantes :

- traiter un signal dérivé d'une rafale optique pour déterminer des valeurs initiales de paramètres de réception ; dans lequel les paramètres de réception comprennent des paramètres pour compenser des altérations physiques ;
- en parallèle au traitement de signal, mettre en mémoire tampon le signal dans une mémoire tampon (32);
- traiter le signal de la mémoire tampon pour générer un deuxième signal, dans lequel le traitement est basé sur les paramètres de réception et comprend les étapes suivantes : initialiser les paramètres de réception avec les valeurs initiales de paramètres de réception, et affiner davantage les paramètres de réception ; et
- en se basant sur le deuxième signal, effectuer l'identification de symboles.

**Fig. 1**

**Fig. 2**

Fig. 3

from PD1 → ADC (11a)
from PD2 → ADC (11b)
from PD3 → ADC (11c)
from PD4 → ADC (11d)

Resampling (13)

j
⊕

j
⊕

converging box containing the different converging steps (30)

Parameter memory registers (33)

FIFO buffer "m samples" memory (32) (31)

m

converging box using directly the parameters of the parameter memory registers

Symbol identification (18a)

Symbol identification (18b)

Fig. 4

EP 2 273 701 B1

19

Fig. 5

Fig. 6

## REFERENCES CITED IN THE DESCRIPTION

### Patent documents cited in the description

- EP 1349416 B1
- WO 2007045072 A
- EP 09290325 A

### Non-patent literature cited in the description

- **SEB J. SAVORY.** Digital Filters for Coherent Optical Receivers. *Optics Express,* 21 January 2008, vol. 16 (2), 804-817
- **M. OERDER et al.** Digital filter and Square Timining Recovery. *IEEE Transactions on Communications,* May 1988, vol. 36 (5